# EUROPEAN PATENT SPECIFICATION

(11) **EP 1 773 077 B1**
(45) Date of publication and mention of the grant of the patent: **25.03.2009**
(21) Application number: 06741859.0
(22) Date of filing: 15.05.2006
(51) Int. Cl.: H04W 84/08

(54) **A METHOD OF INDICATING A CHANNEL AVAILABLE FOR SENDING UPLINK ACCESS REQUEST AND CORRESPONDING SYSTEM, BASE STATION AND MOBILE STATION**
VERFAHREN ZUM ANZEIGEN EINES VERFÜGBAREN KANALS FÜR DIE ÜBERPRÜFUNG EINER AUFWÄRTSZUGRIFFSANFORDERUNG UND ÄHNLICHEs SYSTEM, FUNKFESTSTATION UND MOBILENDGERÄT
PROCEDE D'INDICATION D'UN CANAL DISPONIBLE POUR L'EMISSION D'UNE DEMANDE D'ACCES EN LIAISON ASCENDANTE ET SYSTÈME, STATION DE BASE ET STATION MOBILE CORRESPONDANTS

(30) Priority: 13.05.2005 CN 200510069291; 10.04.2006 CN 200610073012
(43) Date of publication of application: 11.04.2007
(73) Proprietor: Huawei Technologies Co., Ltd., Longgang District Shenzhen Guangdong 518129 (CN)
(72) Inventor: Liu, Guang, 518129 Shenzhen Guangdong (CN); Chen, De, 518129 Shenzhen Guangdong (CN); Zheng, Yali, 518129 Shenzhen Guangdong (CN)
(74) Representative: Thun, Clemens
(86) International application number: PCT/CN2006/000969
(87) International publication number: WO 2006/119710

(56) References cited:
- CN-A- 1 537 394
- US-A1- 2003 048 764

## Description

### Field of the Invention

The present invention relates to the technique of uplink preemption in a radio trunking communication system, and particularly to a method for indicating a channel for sending an uplink access request, a trucking system, a Base Station (BS) and a Mobile Station (MS).

### Background of the Invention

Radio trunking communication system, known as trunking system, is one of relatively economical and flexible communication systems for management and control developed in recent years. It is widely used in the governmental organizations, energy and transportation enterprises, airports, harbors, fire-fighting police units, water conservancy facilities and military, for satisfying the need of internal communications.

A basic service of a trunking system is the Voice Group Call Service (VGCS). VGCS provides the service that one subscriber may call multiple subscribers located in a given group call area and having the same group identification (group ID). The service area may be restricted to a single Mobile Switching Center (MSC) area or may exceed one MSC area. The VGCS operates in semiduplex mode. During a call, any subscriber in the trunking group may be a talking service subscriber while other members of the trunking group are listeners. However, only one subscriber may talk at any time.

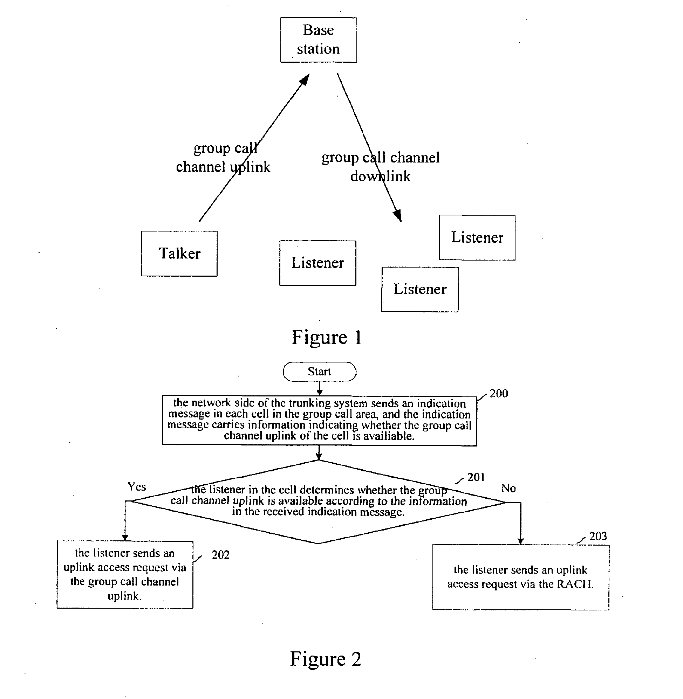

Figure 1 shows a schematic diagram illustrating a group call procedure in the prior art. Suppose that all subscribers in a trunking group belong to one base station (BS). During a group call establishment, the BS allocates a group call channel consisting of a combined uplink/downlink. One of the subscribers, as a presently talking subscriber, may use a mobile station (MS) talking on the uplink channel in a group transmit mode and others as presently listening subscribers may listen on the downlink channel in a group receive mode. Voice group call indication messages may be broadcasted on the downlink, e.g. a Notification CHannel (NCH).

Subscribers in a trunking system may belong to different trunking groups and different groups have different priorities. Within a trunking group, in order to render the following different services to different subscribers, different subscribers in a trunking group may have subscriptions to use different talker priorities, and these talker priorities are stored in the MS used by the subscriber.
1. Subscribers with different priorities in a trunking group have different parameters configured during a random access, e.g., the repeating times configured for transmission are different, and the time intervals configured for retransmission are different, etc., which lead to different success rates of access.
2. When subscribers with different priorities in a trunking group initiate uplink access requests at the same time, the trunking system may make decisions based on the subscriber priorities, and assign the uplink to the subscriber with a higher priority.
3. When a subscriber with a lower talker priority in the trunking group is talking on the uplink, subscribers with higher priorities are capable of interrupting the voice of the subscriber with lower talker priority and preempting the uplink channel.

In order to implement the above item 3, i.e. when a subscriber with low talker priority is talking on the uplink, and a subscriber with higher talker priority wants to send an uplink access request to interrupt the conversation of the subscriber with low talker priority and to become the talker, a solution is required for an issue of how to initiate an uplink access request by the listener when the current talker is talking on the uplink channel. At present, there are two methods primarily.

In the first method, the talker occupies a dedicated channel uplink, and listeners may initiate uplink access requests on the group call channel uplink. The network side of the trunking system responses to the uplink access request of one listener releases the dedicated channel and allocates a dedicated channel uplink for the listener. The listener may talk on the allocated dedicated channel uplink.

There are two scenarios in accordance with this method. The first scenario is that, the listener starts to talk on the group call channel uplink, and then the network side assigns a dedicated channel uplink to the listener for talking when the dedicated channel uplink is ready for the listener. The second scenario is that, the network side allocates the listener a dedicated channel uplink and assigns the dedicated channel uplink directly to the listener for talking. In both cases, the dedicated channel of the original taker shall be released as soon as possible. The listener who is permitted to talk becomes the new talker. After the new talker starts talking on the dedicated channel uplink, the group call channel uplink is available, and other subscribers of the trunking group may send uplink access requests on the group call channel uplink.

In the second method, also known as the 1.0 channel mode, the talker is talking on the allocated group call channel uplink, and the listeners may initiate an uplink access requests via a Random Access Channel (RACH) within the trunking group. When the group call channel uplink is available, however, subscribers of the trunking group may also initiate an uplink access request on the group call channel uplink. There are two scenarios of initiating an uplink access request on the group call channel uplink herein. The first scenario is that there is no talker in the trunking group at present, and the group call channel uplink is available; the second scenario is that there is a talker in the trunking group at present, and the talker occupies the group call channel uplink of its home cell while the listeners of other cells of the trunking group may initiate uplink access requests on the group call channel uplinks allocated by their own cells. Since the delay character of an RACH is inferior to that of a group call channel uplink, the network side of trunking system inclines to send a message indicating that the group call channel uplink is available to subscribers within the trunking group via the group call channel downlink when the group call channel uplink is available, in order to use the group call channel uplink to initiate an uplink access request as much as possible. On receipt of the message, subscribers within the trunking group may initiate uplink access requests on the available group call channel uplink.

However, in the 1.0 channel mode, listeners located in the same cell as the talker are unable to use the group call channel uplink to initiate uplink access requests while listeners located in different cells from the talker are capable of using the group call channel uplinks to initiate uplink access requests. Therefore, a solution is needed to notify listeners of the cell in which the talker is currently located, to enable a listener to determine whether the listener is located in the same cell as the talker. This solution is required for avoiding the case that the listener has to send an uplink access request via the RACH. In addition, when the talker that has initiated an uplink access request is assigned a group call channel uplink first and then assigned a dedicated channel uplink for talking, listeners are unable to send uplink access requests via the group call channel uplink when the talker is talking on the group call channel uplink.

Document US 2003/0048764 discloses a method and system tor group call services in a COMA radio access network over a GSM-MAP or ANSI-41 core network. However, document US 2003/0048764 does not aim to solve the above issues.

### Summary of the Invention

In view of the above, embodiments of the present invention provide a trunking system, a method for indicating a channel for sending an uplink access request, a Base Station and a Mobile Station, to inform the subscribers in a trunking group that an idle uplink channel may be used for sending an uplink access request.

In an embodiment of the present invention, a method for indicating to subscribers of a trunking group a channel for sending an uplink access request may include:
sending an indication message which indicates whether a group call channel uplink is available in a cell of a group call area;
sending an uplink access request via the group call channel uplink by a listener of the trunking group if the group call channel uplink is available according to the indication message; and
sending the uplink access request via an uplink channel other than the group call channel uplink by the listener if the group call channel uplink is unavailable according to the indication message.

In another embodiment of the present invention, a trunking system may include a BS and a MS at least. The BS is used for sending an indication message which indicates whether a group call channel uplink is available in a cell of a group call area; and the MS is used for sending an uplink access request via the group call channel uplink if the group call channel uplink is available according to the indication message; and for sending the uplink access request via an uplink channel other than the group call channel uplink if the group call channel uplink is unavailable according to the indication message.

Also in another embodiment of the present invention, a Base Station, may include:
a unit adapted to send an indication message indicating whether a group call channel uplink is available in a cell of a group call area of a trunking group;
receive an uplink access request via the group call channel uplink from a listener of the trunking group if the group call channel uplink is available according to the indication message; and
receive the uplink access request via an uplink channel other than the group call channel uplink from the listener if the group call channel uplink is unavailable according to the indication message.

Also in another embodiment of the present invention, a Mobile Station (MS), may include:
a unit adapted to receive from a network side an indication message indicating whether a group call channel uplink is available in a cell of a group call area;
send an uplink access request via the group call channel uplink if the group call channel uplink is available according to the indication message; and
send the uplink access request via an uplink channel other than the group cell channel uplink if the group call channel uplink is unavailable according to the indication message.

Embodiments of the present invention provide a method for sending an indication message via downlink channels to indicate the subscribers in the trunking group which kind of uplink channel may be used for sending an uplink access request. The subscribers of the trunking group may select the group call channel uplink or the RACH for sending an uplink access request according to the indication message after receiving the indication message via the downlink channel. Therefore, the network side of the trunking system is able to inform the listener of the trunking group to send an uplink access request via an idle uplink channel. In addition, when the new talker occupies the group call channel uplink, the network side may send an indication message indicating that the group call channel uplink is unavailable via a downlink channel. The listener in the trunking group may determine whether to initiate an uplink access request and determine which kind of uplink channel may be used to send the uplink access request. The solution provided in the embodiments of the present invention solves the problem that a listener can not initiate an uplink access request via the group call channel uplink occupied by the talker.

### Brief Description of the Drawings

Figure 1 is a schematic diagram illustrating a group call process in the related art.
Figure 2 is a flowchart illustrating a method for indicating a channel capable of sending an uplink access request in accordance with an embodiment of the disclosure.
Figure 3 is a flowchart of indicating listeners an uplink channel available for sending an uplink access request using the 15 channel mode by the network side of a trunking system in accordance with an embodiment of the disclosure.
Figure 4 is a flowchart of indicating listeners an uplink channel available for sending an uplink access request using the 1.0 channel mode by the network side of a trunking system in accordance with an embodiment of the disclosure.
Figure 5a is a structure diagram of a talker priority indication in an UPLINK BUSY message in the related art.
Figure 5b is a schematic diagram of information carried in the talker priority indication in an UPLINK BUSY message in the related art.
Figure 6a is a structure diagram of the talker priority indication in an UPLINK BUSY message in accordance with an embodiment of the disclosure.
Figure 6b is a schematic diagram of information carried in the talker priority indication in an UPLINK BUSY message in accordance with an embodiment of the disclosure.
Figure 7 is a schematic diagram of information carried in an Uplink Access Indication in a VGCS ADDITIONAL INFORMATION message in accordance with an embodiment of the disclosure.

### Detailed Description of the Invention

This invention is hereinafter described in details with reference to the accompanying drawings and embodiments.

In a trunking system, subscribers in a trunking group may send uplink access requests either on group call channel uplinks or on RACHs allocated during a group call establishment. Embodiments of the present invention provide a method for sending an indication message via downlink channels to indicate the subscribers in the trunking group which kind of uplink channel may be used for sending an uplink access request. The subscribers of the trunking group may select the group call channel uplink or the RACH or other kind of uplink channels for sending uplink access requests according to the indication message after receiving the indication message via the downlink channel.

When the network side of a trunking system adopts the 1.5 channel mode, there are two cases in which the listeners of a trunking group are able to use the group call channel uplinks: the first case is that the talker of the trunking group belongs to the same cell as the listeners and talks on an allocated dedicated channel uplink; the second case is that the talker of the trunking group belongs to different cells from the listeners. At this point, what is needed for the network side of the trunking system is to indicate the listener through an indication message that the group call channel uplink of the cell where the listener is located is available, thus the listener may send an uplink access request via the group call channel uplink after receiving the indication message.

When the network side of trunking system adopts the 1.0 channel mode, there are two cases in which the listeners of a trunking group may send uplink access requests via the group call channel uplinks. One is that the talker of the trunking group belongs to different cells from the listeners, and the other is that there is no talker in the trunking group. At this point, what is needed for the network side of the trunking system is to indicate the listener through an indication message that the group call channel uplink of the cell where the listener is located is available, thus the listener may send an uplink access request via the group call channel uplink after receiving the indication message.

In embodiments of this disclosure, the indication message is of the cell level and is valid within a cell. The network side of the trunking system sends an indication message repeatedly via a downlink channel of the cell, and the indication message carries information indicating whether the group call channel uplink of the cell is available. The listeners of the trunking group in the cell may select either the group call channel uplink or the RACH to send an uplink access request according to the received indication message.

The repetition interval of sending the indication message in the cell by the network side of the trunking system may be predetermined, and information carried in the indication message may be updated timely.

The downlink channel used for sending the indication message in the cell may be a group call channel downlink, a Notification Channel (NCH) or other kind of available downlink channels.

The listener who does not receive the indication message, e.g. the listener who just enters the cell where the indication message is sent, or the listener who just joins the group cal may send an uplink access request via the RACH.

Figure 2 shows a flowchart illustrating a method for indicating a channel available for sending an uplink access request in accordance with an embodiment of this disclosure, including the following steps.

Step 200, the network side of the trunking system sends an indication message in each cell in the group call area, and the indication message carries information indicating whether the group call channel uplink of the cell is available.

Step 201, the listener in the cell determines whether the group call channel uplink is available according to the information in the received indication message. If the group call channel uplink is available, proceed to Step 202; otherwise, proceed to Step 203.

Step 202, the listener sends an uplink access request via the group call channel uplink.

Step 203, the listener sends an uplink access request via the RACH.

The present invention hereinafter is embodied by using the 1.5 channel mode and using the 1.0 channel mode, respectively, to indicate available uplink channels to the listeners of a trunking group for sending uplink access requests.

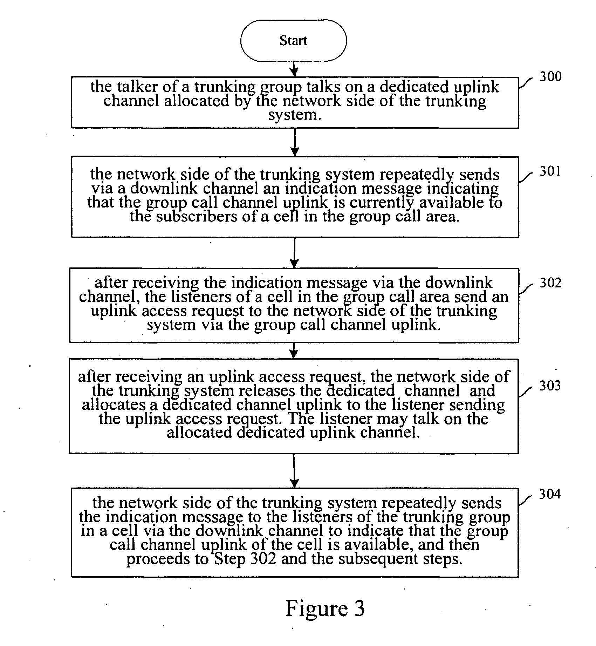

Figure 3 shows a flowchart of indicating listeners an uplink channel available for sending an uplink access request using the 1.5 channel mode by the network side of a trunking system in accordance with an embodiment of the disclosure, including the following steps.

Step 300, the talker of a trunking group talks on a dedicated channel uplink allocated by the network side of the trunking system.

Step 301, the network side of the trunking system repeatedly sends via a downlink channel an indication message indicating that the group call channel uplink is currently available to the subscribers of a cell in the group call area.

Step 302, after receiving the indication message via the downlink channel, the listeners of a cell in the group call area send an uplink access request to the network side of the trunking system via the group call channel uplink.

The network side of the trunking system may also send via the downlink channel the talker priority of the talker who currently occupies the dedicated channel uplink, and the listeners may compare their talker priorities with that of the talker before sending an uplink access request. If the talker priority of the listener is higher than that of the talker, the listener may send an uplink access request; otherwise, send no uplink access request. Such steps, however, are not shown in Figure 3.

Step 303, after receiving an uplink access request, the network side of the trunking system releases the dedicated channel and allocates a dedicated channel uplink to the listener sending the uplink access request. The listener may talk on the allocated dedicated channel uplink.

The network side of the trunking system may also determine whether the talker priority of the listener sending the uplink access request is higher than that of the talker. If the talker priority of the listener is higher than that of the talker, proceed to Step 303; otherwise, give no response to the uplink access request from the listener, or send an access failure message to the listener via the downlink channel. Thus the listener sending the uplink access request may carry its own talker priority in the uplink access request, so that the network side of the trunking system is able to obtain the talker priority of the listener. Such steps, however, are not shown in Figure 3.

Step 304, the network side of the trunking system repeatedly sends the indication message to the listeners of the trunking group in a cell via the downlink channel to indicate that the group call channel uplink of the cell is available, and then proceeds to Step 302 and the subsequent steps.

In Step 303, when allocating a dedicated channel uplink for the listener who sends the uplink access request, the network side may assign the group call channel uplink to the listener first for talking to reduce the delay of uplink channel preemption. At this point, the listener becomes a talker and the network side sends a message indicating that the group call channel uplink of the cell where the present talker is located is unavailable to the listeners via a downlink channel. The message may carry information of the cell where the currently unavailable group call channel uplink is located. After being allocated a dedicated channel uplink, the present talker is assigned the dedicated channel uplink for talking; then subsequent steps of Step 303 are performed.

When receiving the message indicating that the group call channel uplink is unavailable, each listener of the trunking group, particularly the listener with higher talker priority than that of the present talker, determines whether the cell where the unavailable group call channel uplink is located is identical to the cell where the listener is located, according to the information of the cell in the message. If the two cells are identical, the listener sends an uplink access request to the network side of the trunking system via the RACH; otherwise, sends the uplink access request via the group call channel uplink, allocated during the group call establishment, of the cell where the listener is located.

When no talker in the trunking group talks on the group call channel uplink presently, the network side of the trunking system sends a message indicating that the group call channel uplink is available via the downlink channel, so that each listener of the trunking group may send an uplink access request and preempt the uplink.

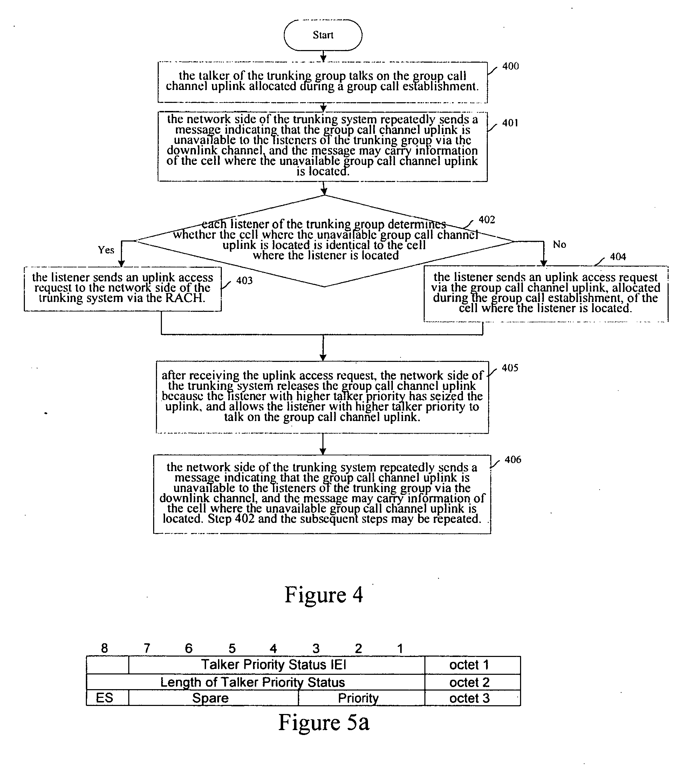

Figure 4 shows a flowchart of indicating listeners an uplink channel available for sending an uplink access request using the 1.0 channel mode by the network side of a trunking system in accordance with an embodiment of the disclosure, including the following steps.

Step 400, the talker of the trunking group talks on the group call channel uplink allocated during a group call establishment.

Step 401, the network side of the trunking system repeatedly sends a message indicating that the group call channel uplink is unavailable to the listeners of the trunking group via the downlink channel, and the message may carry information of the cell where the unavailable group call channel uplink is located.

Step 402, when receiving the message indicating that the group call channel uplink is unavailable, each listener of the trunking group determines whether the cell where the unavailable group call channel uplink is located is identical to the cell where the listener is located according to the information of the cell in the message. If the two cells are identical, proceed to Step 403; otherwise, proceed to Step 404.

Step 403, the listener sends an uplink access request to the network side of the trunking system via the RACH. Step 405 may be subsequently performed.

Step 404, the listener sends an uplink access request via the group call channel uplink, allocated during the group call establishment, of the cell where the listener is located. Step 405 may be subsequently performed.

Before Step 403 or Step 404, the listener may also determine whether its own talker priority is higher than that of the talker. If the talker priority of the listener is higher than that of the talker, proceed to Step 403 or Step 404; otherwise, send no uplink access request to the network side of the trunking system. Such steps are not shown in Figure 4.

Step 405, after receiving the uplink access request, the network side of the trunking system releases the group call channel uplink because the listener with higher talker priority has seized the uplink, and allows the listener with higher talker priority to talk on the group call channel uplink.

The network side of the trunking system may also determine whether the talker priority of the listener sending the uplink access request is higher than that of the talker. If the talker priority of the listener is higher than that of the talker, perform subsequent steps; otherwise, give no response to the uplink access request from the listener, or send an access failure message to the listener via the downlink channel. Thus the listener sending the uplink access request may carry its own talker priority in the uplink access request, so that the network side of the trunking system is able to obtain the talker priority of the listener. Such steps, however, are not shown in Figure 4.

Step 406, the network side of the trunking system repeatedly sends a message indicating that the group call channel uplink is unavailable to the listeners of the trunking group via the downlink channel, and the message may carry information of the cell where the unavailable group call channel uplink is located. Step 402 and the subsequent steps may be repeated.

It can be seen from Figures 3 and 4 that, the indication message may include information indicating that the group call channel uplink is unavailable or indicating that the group call channel uplink is available.

In actual applications, the indication message in accordance with this disclosure may be set in an UPLINK BUSY message or in a VGCS ADDITIONAL INFORMATION message.

In an embodiment of this disclosure, the indication message is set in an UPLINK BUSY message, and the structure of the UPLINK BUSY message is as shown in Table 1.

**Table 1**

| Information Element Identifier (IEI) | Information element | Type/ Reference | Presence | Format | length |
|---|---|---|---|---|---|
| | RR management Protocol Discriminator | Protocol Discriminator | M | V | 1/2 |
| | Skip Indicator | Skip Indicator | M | V | 1/2 |
| | Uplink busy Message Type | Message Type | M | V | I |
| 31 | Talker Priority and emergency indication | Talker Priority Status | O | TLV | 3 |
| 32 | Token | Token | O | TV | 5 |

In Table 1, IEI represents an identifier of an information module, Information element represents the message element, Type/Reference represents a related category, Presence represents whether the corresponding information element is optional, wherein M represents the element is obligated and O represents the element is optional. Format represents the format of the corresponding information element, wherein V represents that the Type/Reference of the corresponding information element is carried via one eight-byte group and TLV represents that the Type/Reference, length and information value of the corresponding information element are respectively carried by three eight-byte groups; and length represents the length of the corresponding information element.

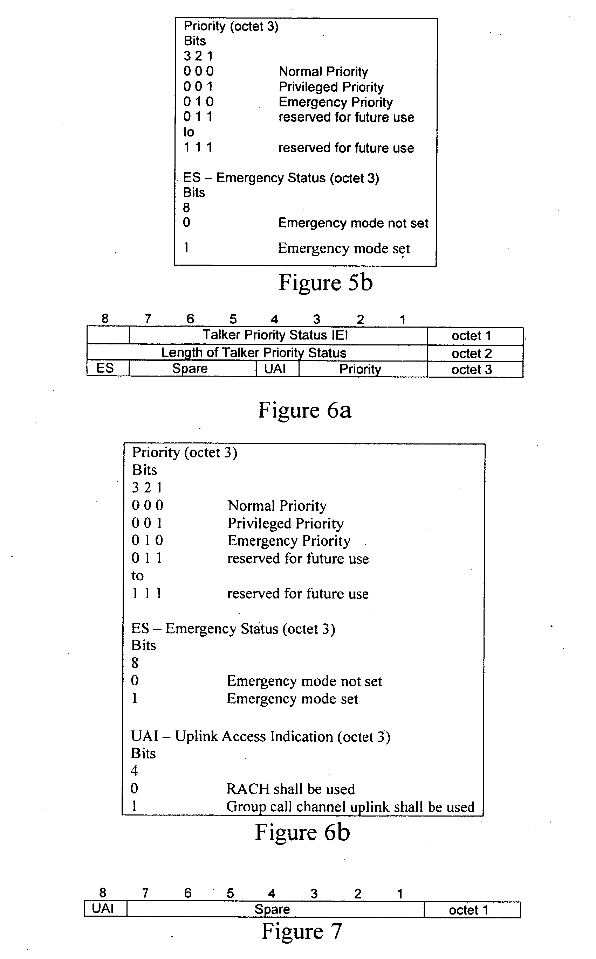

The indication message is included in the Talker Priority and emergency indication of the UPLINK BUSY message illustrated in Table 1 in accordance with this embodiment of this disclosure, and the structure of the Talker Priority and emergency indication is as shown in Figures 5a and 5b. In Figure 5a the Talker Priority and emergency indication occupies 24 bytes, wherein the first 8 bytes are allocated to an identifier of the Talker Priority and emergency indication, the second 8 bytes are allocated to the length of the Talker Priority and emergency indication and the third 8 bytes are allocated to Emergency Status (ES), talker priority and spare. Figure 5b shows detailed information of the Emergency Status (ES) and talker priority. For example, if all three bits of the third 8 bytes are 0, Normal priority is represented. The bytes from the fourth to the seventh are spare.

Therefore, the indication message provided in this embodiment may be represented by any byte from the fourth byte to the seventh byte of the third 8 bytes of the Talker Priority and emergency indication in the UPLINK BUSY message. As shown in Figures 6a and 6b, in Figure 6a, an indication indicating whether the group call channel uplink is available, i.e. an Uplink Access Identifier (UAI) indicating whether the group call channel uplink is available may occupy any one byte from the fourth byte to the seventh byte of the third 8 bytes. In Figure 6b, for example, the UAI occupies the fourth byte of the third 8 bytes. The group call channel uplink is available when the UAI is set to 1 and the group call channel uplink is unavailable when the UAI is set to 0. And when the group call channel uplink is unavailable, the uplink access request may be sent via the RACH rather than other kinds of uplink channels.

In accordance with this embodiment, the UPLINK BUSY message may be sent via the group call channel downlink and may be sent repeatedly.

In another embodiment of this disclosure, the indication message is set in a VGCS ADDITIONAL INFORMATION message, and the structure of the VGCS ADDITIONAL INFORMATION is as shown in Table 2.

**Table 2**

| INFORMATION ELEMENT | DIRECTION | TYPE | LEN |
|---|---|---|---|
| Message Type | MSC-BSS | M | I |
| Talker Identity | MSC-BSS | M | 2-19 |

In Table 2, DIRECTION shows a sending direction; TYPE represents whether the corresponding message is optional, wherein M represents the element is obligated and O represents the element is optional; LEN represents the length of the corresponding element.

An information element may be added in the VGCS ADDITIONAL INFORMATION message in this embodiment. As shown in Figure 7, the added information element is allocated 8 bytes, and the UAI occupies the eighth byte and the other bytes are reserved. In other embodiments, UAI may also occupy the other bytes rather than the eighth byte, but the Most Significant Bit (MSB) or the Least Significant Bit (LSB) is recommended.

The structure of a VGCS ADDITIONAL INFORMATION message with an added information element for setting an indication message in accordance with an embodiment of the present invention is as shown in Table 3.

**Table 3**

| INFORMATION ELEMENT | DIRECTION | TYPE | LEN |
|---|---|---|---|
| Message Type | MSC-BSS | M | 1 |
| Talker Identity | MSC-BSS | M | 2-19 |
| Uplink Access Indication | MSC-BSS | O | 1 |

In Table 3, such an information element as UAI is added, and the structure of the UAI is as shown in Figure 7. The sending direction is from a Mobile Switching Centre (MSC) to a Base Station Subsystem (BSS) which administrates the cell where the listener is located, and in turn to the listener. The Type of the UAI indicates that the information element is optional and the length of the UAI is one octet.

In accordance with embodiments of this disclosure, the VGCS ADDITIONAL INFORMATION message may be sent via the dedicated channel downlink associated with the group call channel.

The network side of the trunking system in embodiments of this disclosure may be the base station of each cell in the group call area, and the message indicating that the group call channel uplink is available or unavailable is determined by the base station of each cell in the group call area. The base station of the cell notifies the subscribers within the cell of the channel by which the uplink access request may be sent according to the usage status of the group call channel uplink of the cell.

When the listener receives the message indicating that the group call channel uplink is unavailable and determines that the cell where the unavailable group call channel uplink is located is its own home cell, the listener may also send an uplink access request via other kinds of uplink channels rather than the RACH. For example, the listener may send an uplink access request via an idle uplink channels rather than the group call channel uplink.

In accordance with embodiments of this disclosure, the listener of a trunking group may receive the indication message via the downlink channel before sending an uplink access request, and may determine which kind of uplink channel may be used for sending the uplink access request. Furthermore, the network side of the trunking system is able to inform the listener of the trunking group to send an uplink access request via an idle uplink channel. In addition, the solution provided in the embodiments of the present invention solves the problem that a listener can not initiate an uplink access request via the group call channel uplink occupied by the talker when the new talker is first assigned the group call channel uplink and then assigned a dedicated channel uplink for talking.

Though the present invention has been illustrated and described by some preferred embodiments, those skilled in the art should understand that various changes may be made in form and detail without departing from the scope of the present invention and therefore should be covered in the protection scope of the present invention defined by the appended claims and its equivalents.

## Claims

1. A method for indicating to subscribers of a trunking group a channel for sending an uplink access request, comprising:
sending an indication message indicating whether a group call channel uplink is available in a cell of a group call area;
receiving an uplink access request via the group call channel uplink from a listener of the trunking group if the group call channel uplink is available according to the indication message **characterized by**
receiving the uplink access request via an uplink channel other than the group call channel uplink from the listener if the group call channel uplink is unavailable according to the indication message.

2. The method of claim 1, wherein sending the indication message comprises:
sending the indication message in any one of an UPLINK BUSY message and a VGCS ADDITIONAL INFORMATION message.

3. The method of claim 2, wherein the indication message occupies any spare byte of a Talker Priority and emergency indication in the UPLINK BUSY message.

4. The method of claim 2, wherein the indication message occupies any byte of an Uplink Access Indication set in the VGCS ADDITIONAL INFORMATION message.

5. The method of claim 1, wherein the indication message carries information indicating whether the group call channel uplink is available, and the process of carrying the information indicating whether the group call channel uplink is available in the indication message comprises:
setting an identifier indicating whether the group call channel uplink is available, and carrying the identifier in the indication message.

6. The method of claim 1, wherein sending the indication message comprises:
sending the indication message repeatedly at intervals determined by network side.

7. The method of claim 1, wherein the indication message is a message indicating that the group call channel uplink is unavailable when the group call channel uplink of the cell is unavailable; and
the indication message is a message indicating that the group call channel uplink is available when the group call channel uplink of the cell is available.

8. The method of claim 7, wherein the message indicating that the group call channel uplink is unavailable carries information of the cell where the unavailable group call channel uplink is located; and
the method further comprises:
before sending the uplink access request by the listener via the uplink channel, determining whether the cell where the unavailable group call channel uplink is located is identical to a cell where the listener is located according to the information carried in the message indicating that the group call channel uplink is unavailable;
sending the uplink access request via the uplink channel if the cell where the unavailable group call channel uplink is located is identical to the cell where the listener is located; and
sending the uplink access request via a group call channel uplink allocated to the cell
where the listener is located during a group call establishment, if the cell where the unavailable group call channel uplink is located is not identical to the cell where the listener is located.

9. The method of claim 1 or 8, wherein the uplink channel comprises any one of a Random Access CHannel (RACH) and an idle uplink channel other than the group call channel uplink

10. A trunking system, comprising:
a first means for sending an indication message which indicates whether a group call channel uplink is available in a cell of a group call area; and
a mobile station for sending an uplink access request via the group call channel uplink if the group call channel uplink is available according to the indication message; the system being **characterized by** the mobile station being arranged for sending the uplink access request via an uplink channel other than the group call channel uplink if the group call channel uplink is unavailable according to the indication message.

11. The trunking system of claim 10, wherein the uplink channel comprises an idle uplink channel other than the group call channel uplink.

12. The trunking system of claim 10, wherein the mobile station is further adapted for determining whether the cell where a unavailable group call channel uplink is located is identical to a cell where the mobile station is located according to the indication message;
sending the uplink access request via the uplink channel if the cell where the unavailable group call channel uplink is located is identical to the cell where the mobile station is located; and
sending the uplink access request via a group call channel uplink allocated to the cell where the mobile station is located during a group call establishment, if the cell where the unavailable group call channel uplink is located is not identical to the cell where the mobile station is located.

13. A Base Station, comprising:
a unit adapted to send an indication message indicating whether a group call channel uplink is available in a cell of a group call area of a trunking group;
receive an uplink access request via the group call channel uplink from a listener of the trunking group if the group call channel uplink is available according to the indication message; **characterized by** the unit being adapted to
receive the uplink access request via an uplink channel other than the group call channel uplink from the listener if the group call channel uplink is unavailable according to the indication message.

14. A Mobile Station (MS), comprising:
a unit adapted to receive from a network side an indication message indicating whether a group call channel uplink is available in a cell of a group call area of a trunking group;
send an uplink access request via the group call channel uplink if the group call channel uplink is available according to the indication message; **characterized by** the unit being adapted to
send the uplink access request via an uplink channel other than the group call channel uplink if the group call channel uplink is unavailable according to the indication message.

## Patentansprüche

1. Verfahren, um Teilnehmern einer Bündelungsgruppe einen Kanal zum Senden einer Uplink-Zugangsanfrage anzuzeigen, umfassend:
Senden einer Anzeigenachricht, die anzeigt, ob ein Uplink zu einem Gruppenrufkanal in einer Zelle eines Gruppenrufbereichs verfügbar ist; Empfangen einer Uplink-Zugangsanfrage über den Uplink zu dem Gruppenrufkanal von einem Empfänger der Bündelungsgruppe, falls der Uplink zu dem Gruppenrufkanal gemäß der Anzeigenachricht verfügbar ist;
**gekennzeichnet durch**
Empfangen der Uplink-Zugangsanfrage über einen Uplink-Kanal zusätzlich zu dem Uplink zu dem Gruppenrufkanal von dem Empfänger, falls der Uplink zu dem Gruppenrufkanal gemäß der Anzeigenachricht nicht verfügbar ist.

2. Verfahren nach Anspruch 1, wobei das Senden der Anzeigenachricht umfasst:
Senden der Anzeigenachricht in eine von einer UPLINK BUSY-Nachricht oder einer VGCS ADDITIONAL INFORMATION-Nachricht.

3. Verfahren nach Anspruch 2, wobei die Anzeigenachricht jedes freie Byte einer Talker Priority und einer Notrufanzeige in der UPLINK BUSY-Nachricht belegt.

4. Verfahren nach Anspruch 2, wobei die Anzeigenachricht jedes Byte einer Uplink-Zugangsanzeige belegt, die in der VGCS ADDITIONAL INFORMATION-Nachricht eingestellt ist.

5. Verfahren nach Anspruch 1, wobei die Anzeigenachricht eine Anzeigeinformation trägt, ob der Uplink zu dem Gruppenrufkanal verfügbar ist, und wobei der Informationsübertragungsprozess, der anzeigt, ob der Uplink zu dem Gruppenrufkanal in der Anzeigenachricht verfügbar ist, umfasst:
Einstellen eines Identifizierers, der anzeigt, ob der Uplink zu dem Gruppenrufkanal verfügbar ist, und Übertragen des Identifizierers in der Anzeigenachricht.

6. Verfahren nach Anspruch 1, wobei das Senden der Anzeigenachricht umfasst:
Senden der Anzeigenachricht wiederholt zu Intervallen, die von Seite des Netzwerks festgelegt sind.

7. Verfahren nach Anspruch 1, wobei die Anzeigenachricht eine Nachricht ist, die anzeigt, dass der Uplink zu dem Gruppenrufkanal nicht verfügbar ist, wenn der Uplink zu dem Gruppenrufkanal der Zelle nicht verfügbar ist; und wobei die Anzeigenachricht eine Nachricht ist, die anzeigt, dass der Uplink zu dem Gruppenrufkanal der Zelle verfügbar ist.

8. Verfahren nach Anspruch 7, wobei die Nachricht, die anzeigt, dass der Uplink zu dem Gruppenrufkanal nicht verfügbar ist, Information der Zelle überträgt, wo der nicht verfügbare Uplink zu dem Gruppenrufkanal lokalisiert ist; und
wobei das Verfahren ferner umfasst:
vor dem Senden der Uplink-Zugangsanfrage durch den Empfänger über den Uplink-Kanal Bestimmen, ob die Zelle, wo der nicht verfügbare Uplink zu dem Gruppenrufkanal lokalisiert ist, identisch mit einer Zelle ist, wo der Hörer gemäß der Information lokalisiert ist, die in der Nachricht übertragen wurde, die anzeigt, dass der Uplink zu dem Gruppenrufkanal nicht verfügbar ist,
Senden der Uplink-Zugangsanfrage über den Uplink-Kanal, falls die Zelle, wo der nicht verfügbare Uplink zu dem Gruppenrufkanal lokalisiert ist, mit der Zelle identisch ist, wo der Hörer lokalisiert ist; und
Senden der Uplink-Zugangsanfrage über einen Uplink zu dem Gruppenrufkanal, der der Zelle zugeordnet ist, wo der Hörer während eines Gruppenrufaufbaus lokalisiert ist, falls die Zelle, wo der nicht verfügbare Uplink zu dem Gruppenrufkanal lokalisiert ist, nicht mit der Zelle identisch ist, wo der Hörer lokalisiert ist.

9. Verfahren nach Anspruch 1 oder 8, wobei der Uplink-Kanal einen Direktzugriffkanal, RACH, oder einen freien Uplink-Kanal außer dem Uplink zu dem Gruppenrufkanal umfasst.

10. Bündelungssystem, umfassend:
ein erstes Mittel, um eine Anzeigenachricht zu senden, die anzeigt, ob ein Uplink zu einem Gruppenrufkanal in einer Zelle eines Gruppenrufbereichs verfügbar ist; und
eine Mobilstation, um eine Uplink-Zugangsanfrage über den Uplink zu dem Gruppenrufkanal zu senden, falls der Uplink zu dem Gruppenrufkanal gemäß der Anzeigenachricht verfügbar ist; wobei das System **dadurch gekennzeichnet ist, dass** die Mobilstation ausgebildet ist, um die Uplink-Zugangsanfrage über einen Uplink-Kanal zusätzlich zu dem Uplink zu dem Gruppenrufkanal zu senden, falls der Uplink zu dem Gruppenrufkanal gemäß der Anzeigenachricht nicht verfügbar ist.

11. Bündelungssystem nach Anspruch 10, wobei der Uplink-Kanal einen leeren Uplink-Kanal zusätzlich zu dem Uplink zu dem Gruppenrufkanal umfasst.

12. Bündelungssystem nach Anspruch 10, wobei die Mobilstation ferner geeignet ist, um zu bestimmen, ob eine Zelle, wo ein nicht verfügbarer Uplink zu dem Gruppenrufkanal lokalisiert ist, mit einer Zelle identisch ist, wo die Mobilstation gemäß der Anzeigenachricht lokalisiert ist;
um die Uplink-Zugangsanfrage über den Uplink-Kanal zu senden, falls die Zelle, wo der nicht verfügbare Uplink zu dem Gruppenrufkanal lokalisiert ist, mit der Zelle identisch ist, wo das Mobilgerät lokalisiert ist; und
um die Uplink-Zugangsanfrage über einen Uplink zu dem Gruppenrufkanal zu senden, der der Zelle zugeordnet wurde, wo die Mobilstation während eines Gruppenrufaufbaus lokalisiert ist, falls die Zelle, wo der nicht verfügbare Uplink zu dem Gruppenrufkanal lokalisiert ist, nicht mit der Zelle identisch ist, wo die Mobilstation lokalisiert ist.

13. Basisstation umfassend:
eine Einheit, die geeignet ist, eine Anzeigenachricht zu senden, die anzeigt, ob ein Uplink zu einem Gruppenrufkanal in einer Zelle eines Gruppenrufbereichs einer Bündelungsgruppe verfügbar ist;
eine Uplink-Zugangsanfrage über den Uplink zu dem Gruppenrufkanal von einem Empfänger der Bündelungsgruppe zu empfangen, falls der Uplink zu dem Gruppenrufkanal gemäß der Anzeigenachricht verfügbar ist; **dadurch gekennzeichnet, dass** die Einheit geeignet ist,
um die Uplink-Zugangsanfrage über einen Uplink-Kanal zusätzlich zu dem Uplink zu dem Gruppenrufkanal von dem Empfänger zu empfangen, falls der Uplink zu dem Gruppenrufkanal gemäß der Anzeigenachricht nicht verfügbar ist.

14. Mobilstation (MS) umfassend:
eine Einheit, die geeignet ist, von Seite eines Netzwerks eine Anzeigenachricht zu empfangen, die anzeigt, ob ein Uplink zu einem Gruppenrufkanal in einer Zelle eines Gruppenrufbereichs einer Bündelungsgruppe verfügbar ist,
eine Uplink-Zugangsanfrage über den Uplink zu dem Gruppenrufkanal zu senden, falls der Uplink zu dem Gruppenrufkanal gemäß der Anzeigenachricht verfügbar ist; **dadurch gekennzeichnet, dass** die Einheit geeignet ist,
die Uplink-Zugangsanfrage über einen Uplink-Kanal zusätzlich zu dem Uplink zu dem Gruppenrufkanal zu senden, falls der Uplink zu dem Gruppenrufkanal gemäß der Anzeigenachricht nicht verfügbar ist.

## Revendications

1. Procédé pour indiquer à des abonnés d'un groupe d'acheminement un canal pour l'émission d'une demande d'accès en liaison ascendante, comprenant:
émettre un message d'indication indiquant si une liaison ascendante d'un canal d'appel de groupe est disponible dans une cellule d'une zone d'appel de groupe;
la réception d'une demande d'accès en liaison ascendante par la liaison ascendante du canal d'appel de groupe d'une personne qui écoute du groupe d'acheminement si la liaison ascendante du canal d'appel de groupe est disponible en accord avec le message d'indication;
**caractérisé par**
la réception d'une demande d'accès à la liaison ascendante par un canal de liaison ascendante autre que la liaison ascendante du canal d'appel de groupe de la personne qui écoute si la liaison ascendante du canal d'appel de groupe n'est pas disponible en accord avec le message d'indication.

2. Procédé selon la revendication 1, où l'émission du message d'indication comprend:
l'émission du message d'indication dans un quelconque d'un message LIAISON ASCENDANTE OCCUPEE et un message d'INFORMATION ADDITIONNELLE VGCS.

3. Procédé selon la revendication 2, où le message d'indication occupe tout octet de réserve de la Priorité de Celui qui Parle et l'indication d'urgence dans le message de LIAISON ASCENDANTE OCCUPEE.

4. Procédé selon la revendication 2, où le message d'indication occupe tout octet d'une indication d'Accès à la Liaison Ascendante établie dans le message d'INFORMATION ADDITIONNELLE VGCS.

5. Procédé selon la revendication 1, où le message d'indication contient des informations indiquant si la liaison ascendante du canal d'appel de groupe est disponible, et le processus contenant l'information indiquant si la liaison ascendante du canal d'appel de groupe est disponible dans le message d'indication comprend:
l'émission d'un identifiant indiquant si la liaison ascendante du canal d'appel de groupe est disponible et porter l'identifiant dans le message d'indication.

6. Procédé selon la revendication 1, où l'émission du message d'indication comprend:
l'émission du message d'indication plusieurs fois à des intervalles déterminés par le côté du réseau.

7. Procédé selon la revendication 1, où le message d'indication est un message indiquant que la liaison ascendante du canal d'appel de groupe n'est pas disponible lorsque la liaison ascendante du canal d'appel de groupe de la cellule est indisponible; et
le message d'indication est un message indiquant que la liaison ascendante du canal d'appel de groupe est disponible lorsque la liaison ascendante du canal d'appel de groupe de la cellule est disponible.

8. Procédé selon la revendication 7, où le message indiquant que la liaison ascendante du canal d'appel de groupe est indisponible porte l'information de la cellule où la liaison ascendante du canal d'appel de groupe non disponible se situe; et
le procédé comprend en outre:
avant l'émission de la demande d'accès en liaison ascendante par celui qui écoute par le canal de liaison ascendante, déterminer si la cellule ou la liaison ascendante du canal d'appel de groupe non disponible se situe est identique à une cellule où celui qui écoute se situe en accord avec l'information contenue dans le message indiquant que la liaison ascendante du canal d'appel de groupe est non disponible;
l'émission de la demande d'accès en liaison ascendante par le canal de liaison ascendante si la cellule où la liaison ascendante du canal d'appel de groupe non disponible se situe est identique à la cellule où celui qui écoute se situe; et
l'émission de la demande d'accès en liaison ascendante par une liaison ascendante du canal d'appel de groupe attribuée à la cellule où se situe celui qui écoute durant l'établissement d'un appel de groupe, si la cellule où la liaison ascendante du canal d'appel de groupe non disponible se situe, n'est pas identique à la cellule où se trouve celui qui écoute.

9. Procédé selon la revendication 1 ou 8, où le canal de liaison ascendante comprend un d'un Canal d'Accès Aléatoire (RACH) et d'un canal de liaison ascendante inactif autre que la liaison ascendante du canal d'appel de groupe.

10. Système d'acheminement, comprenant:
un premier moyen pour l'émission d'un message d'indication qui indique si une liaison ascendante de canal d'appel de groupe est disponible dans une cellule d'une zone d'appel de groupes; et
une station mobile pour l'émission d'une demande d'accès en liaison ascendante par la liaison ascendante du canal d'appel de groupe si la liaison ascendante du canal d'appel de groupe est disponible selon le message d'indication;
le système étant **caractérisé en ce que** la station mobile étant agencée pour l'émission de la demande d'accès en liaison ascendante par un canal de liaison ascendante autre que la liaison ascendante du canal d'appel de groupe si la liaison ascendante du canal d'appel de groupe n'est pas disponible selon le message d'indication.

11. Système d'acheminement selon la revendication 10, où le canal de liaison ascendante comprend un canal de liaison ascendante inactif autre que la liaison ascendante du canal d'appel de groupe.

12. Système d'acheminement selon la revendication 10, où la station mobile est conçue en outre pour déterminer si la cellule où se situe une liaison ascendante du canal d'appel de groupes non disponible est identique à une cellule où se situe la station mobile en accord avec le message d'indication;
l'émission de la demande d'accès en liaison ascendante par le canal de liaison ascendante si la cellule où la liaison ascendante du canal d'appel de groupe non disponible se situe est identique à la cellule où se situe la station mobile; et
l'émission de la demande d'accès en liaison ascendante par une liaison ascendante du canal d'appel de groupe attribué à la cellule où se situe la station mobile durant l'établissement d'un appel de groupe, si la cellule où se situe la liaison ascendante du canal d'appel de groupe non disponible n'est pas identique à la cellule où se situe la station mobile.

13. Station de base, comprenant:
une unité apte à émettre un message d'indication indiquant si une liaison ascendante du canal d'appel de groupe est disponible dans une cellule d'une zone d'appel de groupe d'un groupe d'acheminement;
la réception d'une demande d'accès en liaison ascendante par la liaison ascendante du canal d'appel de groupe par une personne qui écoute du groupe d'acheminement si la liaison ascendante du canal d'appel de groupe est disponible selon le message d'indication; **caractérisé en ce que** l'unité est apte à
recevoir la demande d'accès en liaison ascendante par un canal de liaison ascendante autre que la liaison ascendante du canal d'appel de groupe de la personne qui écoute si la liaison ascendante du canal d'appel de groupe n'est pas disponible selon le message d'indication.

14. Station mobile (MS), comprenant:
une unité apte à recevoir du côté d'un réseau un message d'indication indiquant si une liaison ascendante du canal d'appel de groupe est disponible dans une cellule d'une zone d'appel de groupe d'un groupe d'acheminement;
émettre une demande d'accès en liaison ascendante par la liaison ascendante du canal d'appel de groupe si la liaison ascendante du canal d'appel de groupe est disponible en accord avec le message d'indication;
**caractérisé en ce que** l'unité est apte à émettre une demande d'accès en liaison ascendante par un canal de liaison ascendante autre que la liaison ascendante du canal d'appel de groupe si la liaison ascendante du canal d'appel de groupe n'est pas disponible selon le message d'indication.
